# EUROPEAN PATENT SPECIFICATION

(11) **EP 1 296 132 B1**
(45) Date of publication and mention of the grant of the patent: **18.04.2007**
(21) Application number: 01122756.8
(22) Date of filing: 21.09.2001
(51) Int. Cl.: G01N 25/10, G01N 25/08

(54) **Sensor cell for measuring the concentration of a component in a two component liquid mixture, apparatus and etching system**
Zelle zur Messung der Konzentration einer Komponente einer zwei-komponenten Flüssigkeitsmischung, eine Vorrichtung und eine Ätzanlage
Cellule détectrice de mesure de la concentration d'un composant d'un mélange liquide binaire, un dispositif, et un système de gravure.

(43) Date of publication of application: 26.03.2003
(73) Proprietor: Infineon Technologies AG, 81669 München (DE)
(72) Inventor: Hoyer, Ronald, Dr., 01187 Dresden (DE); Ottow, Stefan, Dr., 01109 Dresden (DE); Stiehl, Hans Ulrich, Dr., 01189 Dresden (DE)
(74) Representative: Epping - Hermann - Fischer

(56) References cited:
- EP-A- 0 715 134
- WO-A-01/23874
- FR-A- 2 636 430
- US-A- 2 900 816
- US-A- 5 182 942
- US-A- 5 500 096
- US-A- 6 001 215
- PATENT ABSTRACTS OF JAPAN vol. 016, no. 508 (E-1282), 20 October 1992 (1992-10-20) & JP 04 188728 A (HITACHI LTD;OTHERS: 01), 7 July 1992 (1992-07-07)

## Description

The present invention refers to a sensor cell for measuring as well as an apparatus for controlling the concentration of a component in a two component liquid mixture, and, in particular, to an etching system for etching a silicon nitride layer.

More specifically, the present invention relates to a measurement system for the inline determination of the water content in an aqueous solution based on the boiling point thereof. This measurement system can advantageously be applied for the in-situ control of the water content in so-called HOT PHOS (hot phosphoric acid) baths.

Usually, in the manufacture of semiconductor integrated circuits, HOT PHOS baths are used for wet-etching of silicon nitride layers. Silicon nitride is generally used as a masking layer or as an insulator layer. When it becomes necessary to remove or to pattern the silicon nitride layer, normally, wet etching with hot phosphoric acid at 160°C with approximately 85 wt-% H₃PO₄ is used.

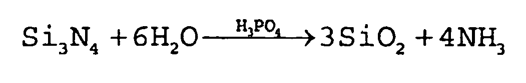

Since the etching rate of silicon nitride is more than ten times higher than the etching rate of silicon dioxide, silicon nitride is selectively etched. However, two important factors influence the etching rate of both silicon nitride and silicon dioxide: (i) the bath temperature which is normally a constant temperature at around 160°C and (ii) the water content of the bath, which strongly influences the oxide etching rate and, therefore, the etching selectivity.

Since the etching process is performed at a temperature above the boiling point of the etching solution, water is constantly evaporated by the following reaction:

4H₃PO₄ ↔ 2H₄P₂O₇ + 2H₂O

Accordingly, the water content of the bath usually varies. This is also caused by the water evaporation during lid opening and the chemical etching reaction. So far, a constant amount of water is continously spiked during the process, but this procedure is not well controlled and the amount of spiked water is often determined empirically.

In particular, this procedure is not well controlled and often determined empirically, especially during load/unload sequences in the HOT PHOS tank.

US-A-5,938,885 discloses a hydrometer cell which can be connected with an etching chamber, for assessing the phosphoric acid content of an aqueous phosphoric acid based on the specific gravity of said aqueous phosphoric acid. Based on this measurement result, the water content can be raised by adding water.

Moreover, US-A-4,980,017 discloses a method for recirculating a high-temperature etching solution, wherein a portion of the etching solution is continously removed from an etching bath, and an amount of water is added to the removed portion. The amount of water added is determined on the basis of the temperature difference between a preset boiling temperature and the actual temperature of the removed portion of the etching solution.

US patent US-A-5,500,096 discloses an apparatus for determining the concentration of the less volatile component of a boiling liquid in a distillation chamber. The apparatus measures the temperature of the boiling liquid. A sample inlet, a sample drain, a vapour outlet, and a heating element are comprised within the apparatus so that the calculation of concentration based on the boiling temperature of the liquid can be performed. Furthermore, a distillate condenser is arranged above the distillation column to treat the vapour exiting at the top of the column.

It is an object of the present invention to provide a sensor cell for accurately and in-line measuring the concentration of a component in a two component liquid mixture. Moreover, it is an object of the invention to provide an apparatus for controlling the concentration of a component in a two component liquid mixture as well as an etching system for etching a silicon nitride layer based on this sensor cell.

According to the present invention, the above object is achieved by a sensor cell for measuring the concentration of a component in a two component liquid mixture, comprising a sample inlet for feeding said mixture into said sensor cell, a sample drain for draining said mixture from said sensor cell, a vapour outlet for exhausting an evaporated component from said mixture, an apparatus for setting a temperature of said liquid mixture to a temperature below the boiling point of said liquid mixture, a heating element for heating said liquid mixture at a constant heating rate under dynamic equilibrium conditions to a temperature above the boiling point of said liquid mixture, and a device for calculating the concentration of said component adapted to determine a curve exhibiting the temperature of the liquid mixture over time and determining the point in time at which the slope of the temperature curve changes and determining the concentration of said component in dependence on the point in time.

Moreover, the object of the present invention is achieved by an apparatus for controlling the concentration of a component in a two component liquid mixture comprising the sensor cell as defined above, a tank for storing the component having the lower boiling point, a pump for adding an amount of said component having the lower boiling point and a control system for setting said amount of the component added to the liquid mixture based on the result supplied by said sensor cell.

In particular, the present invention provides an etching system for etching a silicon nitride layer deposited on a substrate, comprising a process tank filled with aqueous ortho-phosphoric acid, said process tank having an outlet for draining part of said aqueous ortho-phosphoric acid and an inlet for feeding aqueous ortho-phosphoric acid, said substrate being placed into said process tank and an apparatus for controlling the concentration of a component in a two component liquid mixture as defined above, wherein the sensor cell is connected with said process tank inlet and said process tank outlet.

Accordingly, the present invention provides a sensor cell which can in-situ monitor the concentration of one component of a two component liquid mixture. Based on this concentration, an amount of the component having the lower boiling point can be added to the liquid mixture from a tank for storing this component.

Thus, the present invention provides the following advantages:
- The concentration of a component in a two-component liquid mixture can exactly and in-situ be measured.
- Thereby, it becomes possible to in-situ control the concentration of this component by adding an amount of the component having the lower boiling point based on the measurement result.
- As a consequence, when the present invention is applied to a HOT PHOS bath for etching a silicon nitride layer, the etch rate of silicon nitride in comparison to silicon dioxide can advantageously be stabilized whereby a high selectivity is given and, consequently, the process becomes much improved.
- As a further consequence the bath life time will be extended.
- The sensor cell of the present invention and the apparatus for controlling the concentration of a component have a comparatively simple instrumentation. As a consequence, they can be easily applied to existing apparatus without any need for a major change of the hardware setup thereof.
- The measurement as well as the in-situ control of the concentration can be automatically performed.

In the following, the present invention will be described with reference to the accompanying drawings.
- Figure 1: illustrates the setup of an etching system according to the present invention;
- Figure 2: illustrates the setup of a sensor cell according to the present invention; and
- Figure 3: shows an examplary diagram illustrating the temperature versus concentration (time) characteristics of a HOT PHOS system.

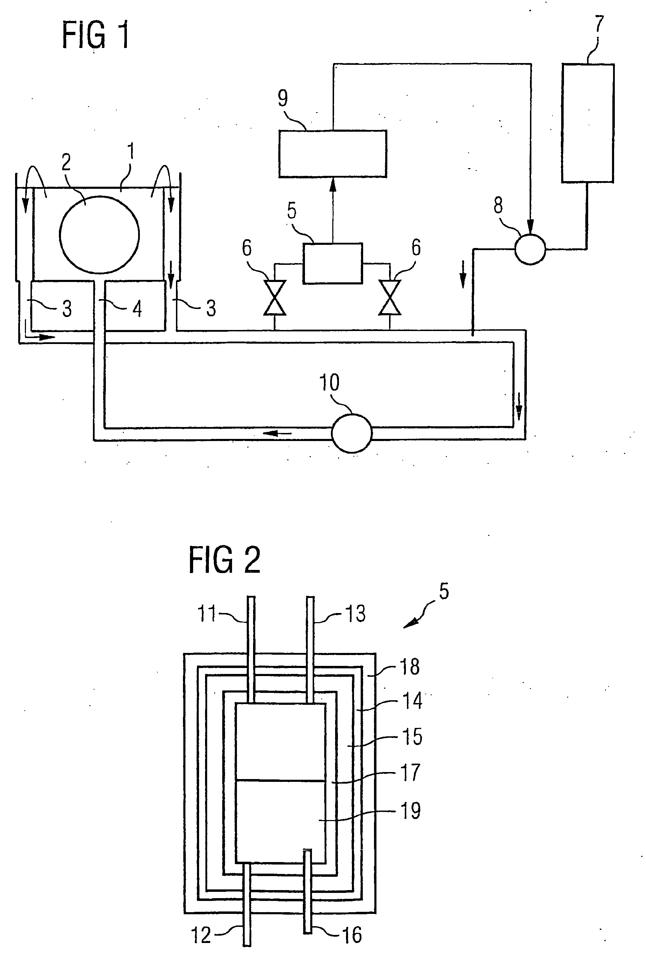

In Figure 1, reference numeral 1 denotes a process tank which is filled with hot aqueous ortho-phosphoric acid (H₃PO₄), and reference numeral 2 denotes a semiconductor wafer which is placed in the process tank, the semiconductor wafer having a silicon nitride layer thereon which is to be etched. In one practical embodiment the volume of aqueous ortho-phosphoric acid filled into the process tank amounts to approximately 80 liter. The hot aqueous ortho-phosphoric acid is held at a temperature of approximately 160°C by a heating apparatus (not shown).

The process tank 1 has an outlet 3 for permanent recirculation of at least part of the aqueous ortho-phosphoric acid and an inlet 4 for permanently feeding aqueous ortho-phosphoric acid. The outlet 3 and the inlet 4 form part of a recirculation line in which the ortho-phosphoric acid is circulated by means of a pump 10. Water from a water tank 7 is constantly spiked into the ortho-phosphoric acid. In said practical embodiment the flow rate is in the range of approximately 70 milliliter/minute. A part of the ortho-phosphoric acid circuit is by-passed by a sensor cell 5 for measuring the concentration of the ortho-phosphoric acid. The measurement result of the sensor cell 5 is forwarded to a control system 9 which in turn controls the amount of water supplied from the water tank 7 by the pump 8. Inlet and outlet valves 6 for regulating the flow of the ortho-phosphoric acid into and out from the sensor cell are also provided.

The sensor cell 5 for measuring the water concentration in the aqueous ortho-phosphoric acid has a setup as shown in Figure 2. There are provided a sample inlet 11 for feeding a sample 19 of the ortho-phosphoric acid to the sensor cell, and a sample drain 12 for draining the ortho-phosphoric acid from the sensor cell. A typical sample volume amounts to approximately 1 to 2 ml (milliliter). A vapor outlet 13 for exhausting evaporated water is also provided. A cooling apparatus 14 is provided which lowers the temperature of the hot phosphoric acid, to a value well below, advantageously 15 K below the boiling point of the liquid. A heating element 15 is also provided for elevating the temperature to a temperature well above, advantageously 15 K above the boiling point of the sample. A temperature probe for measuring the actual temperature of the sample is denoted by reference numeral 16. Reference numeral 17 denotes a thermal short circuit for providing a uniform temperature within the sensor cell, whereas reference numeral 18 denotes an isolation for thermally isolating the sample from the exterior.

The measurement of the water concentration of the hot aqueous ortho-phosphoric acid is performed as follows. First, a calibration with a solution having a known water concentration is performed. The processing of the result of the calibration measurement will be explained later. Thereafter, the sensor cell is rinsed with the sample liquid with a volume of approximately 5 times the cell volume. Then, the sample is cooled down by the cooling apparatus 14 to approximately 15 K below the boiling point of the sample. Thereafter, the sample is heated by the heating element 15 to approximately 15 K above the boiling point of the sample. During this heating sequence the temperature difference ΔT of the sample against the heating element is assessed. It is plotted in a diagram over time or concentration, respectively. The heating element is heated up linearily. The temperature of the heating element is the reference system for the temperature.

Assuming a constant heating rate of the heating element, also the sample temperature in dependence of the time can be plotted. The sample temperature can easily be assessed by measuring a temperature difference between the sample and the heating element which is taken as a reference. In this case, the absolute sample temperature as a reference point is only needed once for quantification.

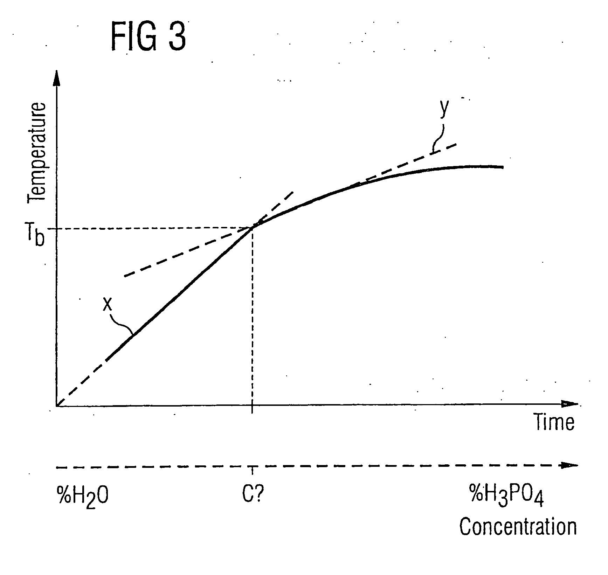

An exemplary diagram showing the sample temperature versus time characteristics of a hot aqueous ortho-phosphoric acid is shown in Figure 3. For assessing the concentration of the sample, the point at which the slope of this characteristics changes is determined. As can be gathered from Figure 3, the sample temperature versus time characteristics assumes the form of a straight line in a lower portion thereof, whereas it assumes a different form in the higher portion thereof.

This can be explained as follows. In a system, if a pure, not decomposable substance is heated, the temperature will not exceed the boiling point thereof. If a liquid mixture is heated at a constant heating rate, the temperature thereof will first increase linearly with time as indicated by the straight line x. As soon as the boiling point T_{b} of the liquid mixture is reached, the boiling point of the two component system is represented by the line y because one component is constantly evaporated and therefore the concentration of the liquid phase is constantly changed. Differently stated, the decrease of the water content of the aqueous hot phosphoric acid results in a higher energy amount for further water evaporation.

Accordingly, the point at which the slope of the sample temperature versus time characteristics is changing indicates on the temperature axis the boiling point of the liquid mixture having the water concentration which is to be determined. If the time axis is appropriately calibrated, the point at which the slope of the sample temperature versus time changes indicates on the time axis the water concentration of the sample.

The point at which the slope of the sample temperature versus time characteristics is changing can for example be assessed by determining the point of intersection between the straight line x and a tangent to the line y. The exact point at which the tangent touches the line y can be best determined empirically by using several water-phosphoric acid mixtures having different but known concentrations. In particular, the "best-matching" tangent to line y, that is the tangent having the highest number of measuring points in common or nearly in common with line y can be chosen.

Next, from the calibration measurement which was conducted under the same heating conditions before the beginning of the concentration measurement of the sample, this point of intersection indicating a specific time on the time axis, is set into relation with a specific concentration of the phosphoric acid.

The measurement time typically is about 5 to 10 minutes, in dependence from the required accuracy of the measurement and the used temperature range. In particular, the velocity for heating the sample is limited because a dynamic equilibrium in the sample is necessary for the temperature measurement.

After the measurement has been finished, the sample is drained off the sensor cell by opening the outlet valve so that the used sample will be returned to the main chemistry loop. The control system 9 controls the pump 8 so that the water flow into the liquid circuit is set in dependence from the measured water concentration.

Thereafter, a new measurement of the water content can be performed. Since typical time constants for reaching an equilibrium within the liquid mixture amount to approximately 30 minutes, the time interval between measurements should be of the same order.

Accordingly, the water concentration of the HOT PHOS bath can be insitu measured and, as a consequence, the water concentration can be easily and online controlled by setting the amount of water added on the basis of the measurement result. Hence, it is possible to maintain constant the water content of the aqueous phosphoric acid whereby the etching rate of silicon nitride and silicon dioxide can be maintained constant.

In particular, the whole measurement and control cycle of the water content can be fully automated, whereby the control of the etching process can be further simplified.

Although the present invention has been described with respect to an aqueous phosphoric acid, it is obvious that it can also be applied to any other two component liquid mixture.

### List of Reference Numerals

- 1: process tank
- 2: wafer
- 3: process tank outlet
- 4: process tank inlet
- 5: sensor cell
- 6: inlet and outlet valves
- 7: water tank
- 8: pump
- 9: control system
- 10: pump
- 11: sample inlet
- 12: sample drain
- 13: vapour outlet
- 14: cooling apparatus
- 15: heating element
- 16: temperature probe
- 17: thermal short circuit
- 18: isolation
- 19: sample

## Claims

1. A sensor cell for measuring the concentration of a component in a two component liquid mixture, comprising:
- a sample inlet (11) for feeding said mixture into said sensor cell (5);
- a sample drain (12) for draining said mixture from said sensor cell (5) ;
- a vapour outlet (13) for exhausting an evaporated component from said mixture;
- an apparatus (14) for setting a temperature of said liquid mixture to a temperature below the boiling point of said liquid mixture;
- a heating element (15) for heating said liquid mixture at a constant heating rate under dynamic equilibrium conditions to a temperature above the boiling point of said liquid mixture; and
- a device for calculating the concentration of said component adapted to determine a curve exhibiting the temperature of the liquid mixture over time and determining the point in time at which the slope of the temperature curve changes and determining the concentration of said component in dependence on the point in time.

2. The sensor cell according to claim 1, wherein said liquid mixture is held at a temperature near the boiling point, and said apparatus (14) for setting a temperature of said liquid mixture is a cooling element which is adapted to cool the liquid mixture to a predetermined temperature below the boiling point of said liquid mixture.

3. The sensor cell according to claim 1 to 2, wherein said heating element (15) is adapted to elevate the temperature of said liquid mixture to a predetermined temperature above the boiling point of said liquid mixture.

4. The sensor cell according to claim 2 or 3, wherein said predetermined temperature is 15 K.

5. The sensor cell according to any of claims 1 to 4, wherein said liquid mixture is an aqueous ortho-phosphoric acid.

6. An apparatus for controlling the concentration of a component in a two component liquid mixture comprising the sensor cell according to any of claims 1 to 5, a tank for storing the component having the lower boiling point, a pump for adding an amount of said component having the lower boiling point and a control system (9) for setting said amount of the component added to the liquid mixture based on the result supplied by said sensor cell (5).

7. An etching system for etching a silicon nitride layer deposited on a substrate (2), comprising:
a process tank (1) filled with aqueous ortho-phosphoric acid, said process tank (1) having an outlet (3) for draining part of said aqueous ortho-phosphoric acid and an inlet (4) for feeding aqueous ortho-phosphoric acid, said substrate (2) being placed into said process tank (1); and
an apparatus for controlling the concentration of a component in a two component liquid mixture according to claim 6, wherein the sensor cell (5) is connected with said process tank inlet (4) and said process tank outlet (3).

## Patentansprüche

1. Sensorzelle zum Messen der Konzentration einer Komponente in einer Zweikomponenten-Flüssigkeitsmischung, umfassend:
- einen Probeneinlass (11) zum Einleiten der Mischung in die Sensorzelle (5);
- einen Probenabfluss (12) zum Ablassen der Mischung aus der Sensorzelle (5);
- einen Dampfauslass (13) zum Ablassen einer verdampften Komponente aus der Mischung;
- eine Vorrichtung (14) zum Setzen einer Temperatur der Flüssigkeitsmischung auf eine Temperatur unter dem Siedepunkt der Flüssigkeitsmischung;
- ein Heizelement (15) zum Erwärmen der Flüssigkeitsmischung auf eine konstante Erwärmungsrate unter dynamischen Gleichgewichtsbedingungen auf eine Temperatur über dem Siedepunkt der Flüssigkeitsmischung und
- eine Einrichtung zum Berechnen der Konzentration der Komponente, ausgelegt zum Bestimmen einer Kurve, die die Temperatur der Flüssigkeitsmischung über die Zeit hinweg zeigt, und Bestimmen des Zeitpunkts, zu dem sich die Steigung der Temperaturkurve ändert, und Bestimmen der Konzentration der Komponente in Abhängigkeit von dem Zeitpunkt.

2. Sensorzelle nach Anspruch 1, wobei die Flüssigkeitsmischung auf einer Temperatur in der Nähe des Siedepunkts gehalten wird und die Vorrichtung (14) zum Setzen einer Temperatur der Flüssigkeitsmischung ein Kühlelement ist, das ausgelegt ist, die Flüssigkeitsmischung auf eine vorbestimmte Temperatur unter dem Siedepunkt der Flüssigkeitsmischung abzukühlen.

3. Sensorzelle nach Anspruch 1 oder 2, wobei das Heizelement (15) ausgelegt ist, die Temperatur der Flüssigkeitsmischung auf eine vorbestimmte Temperatur über dem Siedepunkt der Flüssigkeitsmischung anzuheben.

4. Sensorzelle nach Anspruch 2 oder 3, wobei die vorbestimmte Temperatur 15K ist.

5. Sensorzelle nach einem der Ansprüche 1 bis 4, wobei die Flüssigkeitsmischung eine wässrige Orthophosphorsäure ist.

6. Vorrichtung zum Steuern der Konzentration einer Komponente in einer Zweikomponenten-Flüssigkeitsmischung, umfassend die Sensorzelle nach einem der Ansprüche 1 bis 5, einen Tank zum Speichern der Komponente mit dem niedrigeren Siedepunkt, eine Pumpe zum Zusetzen einer Menge der Komponente mit dem niedrigeren Siedepunkt und ein Steuersystem (9) zum Setzen der Menge der der Flüssigkeitsmischung zugesetzten Komponente auf der Basis des von der Sensorzelle (5) gelieferten Ergebnisses.

7. Ätzsystem zum Ätzen einer auf einem Substrat (2) abgeschiedenen Siliziumnitridschicht, umfassend:
einen mit wässriger Orthophosphorsäure gefüllten Prozesstank (1), wobei der Prozesstank einen Auslass (3) zum Ablassen eines Teils der wässrigen Orthophosphorsäure und einen Einlass (4) zum Einleiten wässriger Orthophosphorsäure aufweist, wobei das Substrat (2) in dem Prozesstank (1) platziert wird und
eine Vorrichtung zum Steuern der Konzentration einer Komponente in einer Zweikomponenten-Flüssigkeitsmischung nach Anspruch 6, wobei die Sensorzelle (5) mit dem Prozesstankeinlass (4) und dem Prozesstankauslass (3) verbunden ist.

## Revendications

1. Cellule de capteur pour mesurer la concentration d'un constituant dans un mélange liquide à deux constituants comprenant :
- une entrée (11) d'échantillon pour charger le mélange dans la cellule (5) de capteur ;
- un drain (12) d'échantillon pour drainer le mélange de la cellule (5) de capteur,
- une sortie (13) de capteur pour évacuer un constituant évaporé du mélange,
- un dispositif (14) pour régler une température de mélange liquide à une valeur inférieure au point d'ébullition du mélange liquide,
- un élément (15) chauffant pour chauffer le mélange liquide à une vitesse de chauffage constante dans des conditions d'équilibre dynamique jusqu'à une température supérieure au point d'ébullition du mélange liquide ; et
- un dispositif de calcul de la concentration du constituant conçu pour déterminer une courbe donnant la température du mélange liquide en fonction du temps et de détermination du point dans le temps où la pente de la courbe de température change et de détermination de la concentration du constituant en fonction de ce point dans le temps.

2. Cellule de capteur suivant la revendication 1, dans laquelle le mélange liquide est maintenu à une température proche du point d'ébullition et le dispositif (14) de réglage d'une température du mélange liquide est un élément de refroidissement, qui est conçu pour refroidir le mélange liquide jusqu'à une température déterminée à l'avance en dessous du point d'ébullition du mélange liquide.

3. Cellule de capteur suivant la revendication 1 à 2, dans laquelle l'élément (15) chauffant est conçu pour élever la température du mélange liquide jusqu'à une température déterminée à l'avance supérieure au point d'ébullition du mélange liquide.

4. Cellule de capteur suivant la revendication 2 ou 3, dans laquelle la température déterminée à l'avance est de 15 K ;

5. Cellule de capteur suivant l'une quelconque des revendications 1 à 4, dans laquelle le mélange est de l'acide ortho-phosphorique aqueux.

6. Dispositif pour régler la concentration d'un constituant d'un mélange liquide à deux constituants comprenant la cellule de capteur suivant l'une quelconque des revendications 1 à 5, une cuve de stockage du constituant ayant le point d'ébullition le plus bas, une pompe d'addition d'une quantité du constituant ayant le point d'ébullition le plus bas et un système (9) de commande pour régler la quantité du constituant à ajouter au mélange liquide sur la base du résultat fourni par la cellule (5) de capteur.

7. Système d'attaque pour attaquer une couche de nitrure de silicium déposée sur un substrat (2), comprenant :
une cuve (1) de process emplie d'acide ortho-phosphorique aqueux, la cuve (1) de process ayant une sortie (3) pour drainer une partie de l'acide ortho-phosphorique aqueux et une entrée (4) pour charger l'acide ortho-phosphorique aqueux, le substrat (2) étant placé dans la cuve (2) de process ; et
un dispositif de réglage de la concentration d'un constituant d'un mélange liquide à deux constituants suivant la revendication 6, la cellule (5) de capteur étant reliée à l'entrée (4) de la cuve de process et à la sortie (3) de la cuve de process.
